# EUROPEAN PATENT APPLICATION

(11) **EP 2 889 796 A2**
(43) Date of publication of application: **01.07.2015**
(21) Application number: 14200386.2
(22) Date of filing: 29.12.2014
(51) Int. Cl.: G06F 21/53, G06F 21/62, G06F 21/64, G06F 21/85

(54) **Method and system for safe data access**

(30) Priority: 30.12.2013 TW 102149019
(71) Applicant: Chou, Hung-Chien, Taichung City 408 (TW)
(72) Inventor: Chou, Hung-Chien, Taichung City 408 (TW)
(74) Representative: Cordina, Kevin John

(57) **Abstract**

A method for safe data access is to be implemented using a system that may include master and master processing units (13, 2) and a storage medium (3). The storage medium (3) may include a trusted section (31), a monitored section (32) and a hidden section (33). Upon execution of an authenticated program file (311), the master processing unit (2) generates a current digital fingerprint of the authenticated program file (311), and compares the current digital fingerprint with an original digital fingerprint (331). When it is determined that the current digital fingerprint does not correspond with the original digital fingerprint (331), the master processing unit (2) inspects an access record that is associated with the authenticated program file (311) and moves the authenticated program file (311) and any program file recorded in the access record thus inspected to the monitored section (32).

## Description

The invention relates to a method and a system for safe data access.

Data security has become an increasingly important issue, for companies and individuals alike, as Internet usage keeps prospering. Companies fearing consequences of occurrences of data breach and/or leakage may adopt data security technologies such as a web application firewall (WAF), database activity monitoring (DAM), a data loss prevention (DLP) software, an Internet packet sniffer, etc. Implementation of the various technologies may induce certain costs.

Conventionally, a number of mechanisms may be employed to increase security of data. For example, properly assigning a data ownership for each data file stored in a storage medium may ensure that parties other than a data owner may not have access to a particular data file . Specific commands (e.g., "chmod" in Unix-like Systems) may enable change of access permission for each data file.

An object of this invention is to provide a method for safe data access.

Accordingly, a method of this invention may be implemented using a system that may include a master processing unit, a slave processing unit coupled to the master processing unit, and a storage medium coupled to the slave processing unit. The slave processing unit may include a calculating module, a comparing module and a record tracking module. The storage medium may include a trusted section and a monitored section that can be identified and accessed by an operating system, and a hidden section that cannot be identified and accessed by the operating system. The method may include the steps of:
(a) upon execution, by the master processing unit, of an authenticated program file stored in the trusted section of the storage medium, generating, using the calculating module, a current digital fingerprint of the authenticated program file;
(b) comparing, using the comparing module, the current digital fingerprint with an original digital fingerprint that is associated with the authenticated program file and stored in the hidden section; and
(c) when it is determined, by the comparing module, that the current digital fingerprint does not correspond with the original digital fingerprint,
inspecting, by the record tracking module, an access record that is associated with the authenticated program file and stored in the trusted section, and
moving, by the record tracking module, the authenticated program file and any program file recorded in the access record thus inspected to the monitored section .

Another object of this invention is to provide a system that is configured to implement the above-mentioned method.

Accordingly, a system of this invention may include a master processing unit, a slave processing unit coupled to the master processing unit, and a storage medium.

The slave processing unit may include a calculating module, a comparing module and a record tracking module.

The storage medium may include a trusted section and a monitored section that can be identified and accessed by an operating system, and a hidden section that cannot be identified and accessed by the operating system. The trusted section may store an authenticated program file therein.

When the master processing unit executes the authenticated program file, the calculating module may generate a current digital fingerprint of the authenticated program file. The comparing module may compare the current digital fingerprint with an original digital fingerprint that is associated with the authenticated program file and stored in the hidden section.

When it is determined, by the comparing module, that the current digital fingerprint does not correspond to the original digital fingerprint, the record tracking module may inspect an access record associated with the authenticated program file and stored in the trusted section, and move any program file thus inspected to the monitored section.

Other features and advantages of this invention will become apparent in the following detailed description of the embodiment with reference to the accompanying drawings, of which:
Figure 1 is a block diagram of a system according to an embodiment of this invention;
Figure 2 is a flow chart of an authentication procedure performed on a to-be-authenticated program film, according to an embodiment of this invention;
Figure 3 is a flow chart of a procedure performed when an authenticated program file is executed, according to an embodiment of this invention; and
Figure 4 a flow chart of a safe access procedure performed when a to-be-isolated program file is executed, according to an embodiment of this invention.

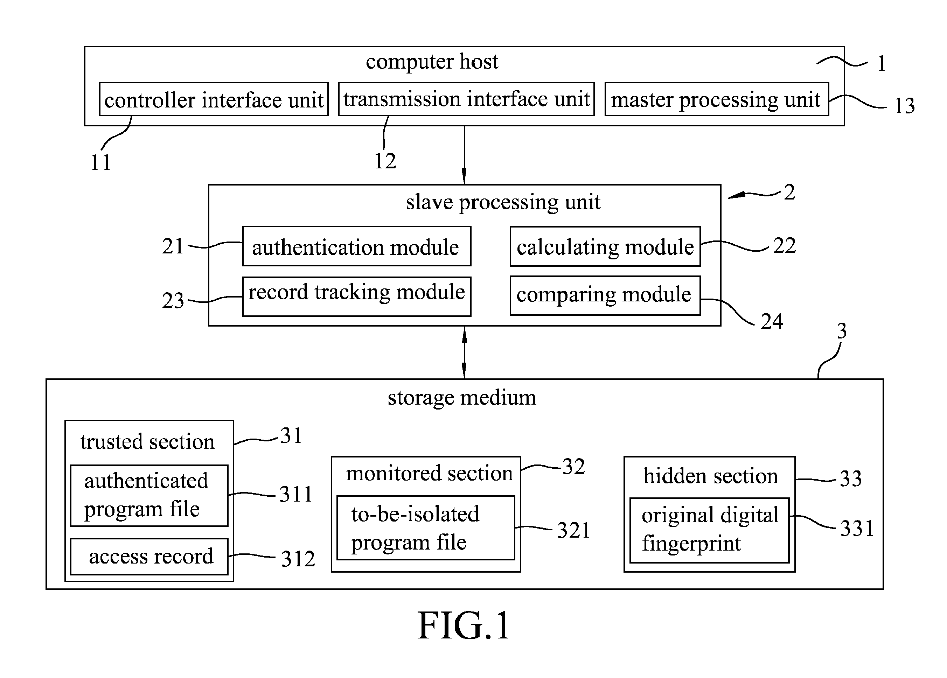

Referring to Figure 1, a system of this invention may be embodied using a desktop computer, a laptop computer, a tablet computer, a smartphone, etc. The system includes a computer host 1, a slave processing unit 2 coupled to the computer host 1, and a storage medium 3.

The computer host 1 includes a controller interface unit 11, a transmission interface unit 12 and a master processing unit 13.

The controller interface unit 11 allows a user to operate the computer host 1, and may be embodied using a keyboard, a mouse, a touch screen, or combinations thereof.

The transmission interface unit 12 is for interacting with other electronic devices using a physical connection and/or over a network. The transmission interface unit 12 may include components supporting transmission means such as a local area network (LAN), a wireless local area network (WLAN), Bluetooth, IEEE 1394, a universal serial bus (USB), a peripheral controller interface (PCI), a peripheral controller interface-express (PCI-e), an accelerated graphic port (AGP), a serial advanced technology attachment (SATA), a parallel advanced technology attachment (GATA), a low pin count (LPC), etc.

In this embodiment, the transmission interface unit 12 may be operable to receive a program file.

The slave processing unit 2 may be embodied using a chip or firmware, and includes an authentication module 21, a calculating module 22, a record tracking module 23 and a comparing module 24.

In this embodiment, the storage medium 3 may be embodied using, for example, a hard disk drive, a solid state drive (SSD), a flash drive, a static random-access memory (SRAM), a synchronous dynamic random-access memory (SDRAM), a double data rate synchronous dynamic random-access memory (DDR SDRAM), etc.

The storage medium 3 stores an operating system (not depicted in the drawings) therein, and includes a trusted section 31, a monitored section 32 and a hidden section 33. In this embodiment, the storage medium 3 is configured such that the trusted section 31 and the monitored section 32 can be identified and accessed by the operating system, and the hidden section 33 cannot be identified and accessed by the operating system.

In this embodiment, the trusted section 31 is primarily used for storing contents that are considered to be authenticated, and the monitored section 32 is primarily used for storing contents that are considered to be non-authenticated. Each of the trusted section 31, the monitored section 32 and the hidden section 33 may include a group of partitioned allocation units in the storage medium 3, and the allocation units in each group may be continuous or scattered in the storage medium 3. The trusted section 31 and the monitored section 32 may be identified by the operating system using a partition table of the storage medium 3, and the hidden section 33 is unable to be identified by the operating system using the partition table of the storage medium 3. While the hidden section 33 cannot be identified and accessed by the operating system, it may be accessed by the slave processing unit 2.

In operation, the authentication module 21 is configured to perform authentication of a program file received via the transmission interface unit 12 (tagged as a to-be-authenticated program file) . In this embodiment, the authentication module 21 employs the x.509 certificate for performing authentication.

Afterward, when it is determined that the authentication of the to-be-authenticated program file is successful, the authentication module 21 tags the to-be-authenticated program file as an authenticated program file 311, and stores the authenticated program file 311 in the trusted section 31. Furthermore, the calculating module 22 generates an original digital fingerprint 331 associated with the authenticated program file 311, and stores the original digital fingerprint 331 associated with the authenticated program file 311 in the hidden section 33.

In this embodiment, the original digital fingerprint 331 associated with the authenticated program file 311 is generated using an irreversible secure hash algorithm (SHA), such as SHA1 or MD5 function.

On the other hand, when it is determined that the authentication of the to-be-authenticated program file is unsuccessful, the authentication module 21 tags the to-be-authenticated program file as a to-be-isolated program file 321, and stores the to-be-isolated program file 321 in the monitored section 32 instead of the trusted section 31. In this way, the to-be-isolated program file 321 will not be able to directly access the content stored in the trusted section 31, which will be elaborated later on.

The authenticated program file 311 stored in the trusted section 31 of the storage medium 3 may then be executed by the master processing unit 13 (under a command from the controller interface unit 11).

In response, the calculating module 22 generates a current digital fingerprint for the authenticated program file 311 . Furthermore, the comparing module 24 fetches the original digital fingerprint 331 that is associated with the authenticated program file 311 from the hidden section 33, and compares the current digital fingerprint with the original digital fingerprint 331.

It should be noted herein that in some embodiments of this invention, a mechanism may be provided to limit the access of the slave processing unit 2 to the content stored in the hidden section 33, e.g., by limiting the access to those instances where the slave processing unit 2 is provided with a specific command, such as one issued by the authenticated program file 311.

When it is determined by the comparing module 24 that the current digital fingerprint corresponds with the original digital fingerprint 331, the slave processing unit 2 subsequently enables access of the authenticated program file 311 to the content stored in any of the trusted section 31 and the monitored section 32.

On the other hand, when it is determined by the comparing module 24 that the current digital fingerprint does not correspond with the original digital fingerprint 331, the record tracking module 23 inspects an access record 312 that is associated with the authenticated program file 311, that is stored in the trusted section 31, and that records any program file that has accessed the authenticated program file 311, and moves any program file that is recorded in the access record 312 thus inspected, along with the authenticated program file 311, to the monitored section 32. In this way, the authenticated program file 311 may be re-tagged as a to-be-authenticated program file and prevented from directly accessing the content stored in the trusted section 31. It is to be noted that in this embodiment, when the to-be-isolated program file 321 stored in the monitored section 32 of the storage medium 3 (which is supposedly unsafe) is executed by the master processing unit 13 (under a command from the controller interface unit 11), the slave processing unit 2 is configured to perform a safe access procedure.

In the safe access procedure, the slave processing unit 2 first determines whether the to-be-isolated program file 321 is attempting to access the trusted section 31 for any particular content.

When such determination is affirmative (i.e., that the to-be-isolated program file 321 is attempting to access the particular content stored in the trusted section 31), the slave processing unit 2 drives the storage medium 3 so as to copy the particular content from the trusted section 31 to the monitored section 32.

Furthermore, the slave processing unit 2 is configured to create a virtual directory structure in the monitored section 32, and write the particular content copied from the trusted section 31 under the virtual directory structure . As a result, the slave processing unit 2 allows access of the to-be-isolated program file 321 to the content that is in the monitored section and that corresponds to the particular content stored in the trusted section 31, via the virtual directory structure.

On the other hand, when it is determined by the slave processing unit 2 that the to-be-isolated program file 321 is not attempting to access any content stored in the trusted section 31, the slave processing unit 2 allows access of the to-be-isolated program file 321 to the content stored in the monitored section 32.

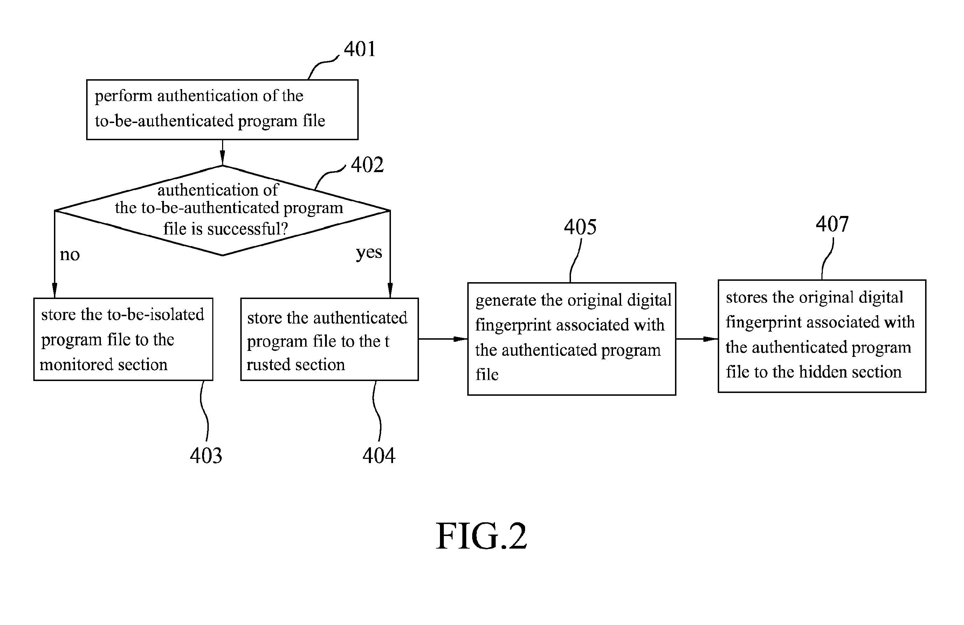

Steps of a method for safe data access to be implemented using the system of this embodiment will now be described with further reference to Figures 2 to 4 in detail.

Referring to Figure 2, in step 401, when a to-be-authenticated program file is received by the authentication module 21 via the transmission interface unit 12, the authentication module 21 performs authentication of the to-be-authenticated program file.

In step 402, the authentication module 21 determines whether the authentication of the to-be-authenticated program file is successful.

When it is determined, in step 402, that the authentication of the to-be-authenticated program file is unsuccessful, the authentication module 21 tags the to-be-authenticated program file as a to-be-isolated program file 321 and stores the to-be-isolated program file 321 in the monitored section 32 in step 403.

On the other hand, when it is determined, in step 402, that the authentication of the to-be-authenticated program file is successful, the authentication module 21 tags the to-be-authenticated program file as an authenticated program file 311 and stores the authenticated program file 311 to the trusted section 31 in step 404.

Following step 404, the calculating module 22 generates the original digital fingerprint 331 associated with the authenticated program file 311 in step 405, and stores the original digital fingerprint 331 associated with the authenticated program file 311 in the hidden section 33 in step 407.

When a program file stored in the storage medium 3 is executed by the master processing unit 13, the slave processing unit 2 is configured to employ different procedures to handle the access to the storage medium 3 with reference to the tag on the program file (i.e., whether the tag indicates that the program file is an authenticated program file 311 or a to-be-isolated program file 321) and with reference to the section in which the program file is stored (i.e., the trusted section 31 or the monitored section 32).

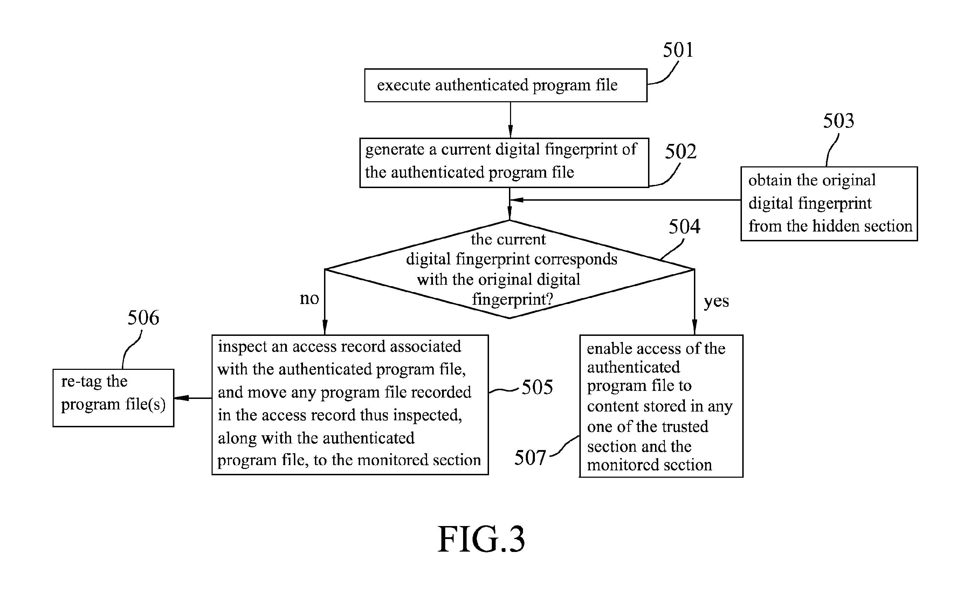

Specifically, referring to Figure 3, when the authenticated program file 311 is executed in step 501, the calculating module 22 generates a current digital fingerprint of the authenticated program file 311 in step 502.

Afterward, in step 503, the comparing module 24 accesses the storage medium 3 so as to obtain the original digital fingerprint 331 that is associated with the authenticated program file 311 from the hidden section 33. The comparing module 24 then compares the original digital fingerprint 331 and the current digital fingerprint in step 504.

When it is determined by the comparing module 24 that the current digital fingerprint does not correspond with the original digital fingerprint 331 (that is, the authenticated program file 311 has been altered after being tagged as authenticated), in step 505, the record tracking module 23 inspects an access record 312 that is associated with the authenticated program file 311, that is stored in the trusted section 31 and that records any program file that has accessed the authenticated program file 311, and moves any program file recorded in the access record 312 thus inspected, along with the authenticated program file 311, to the monitored section 32. As a result, the authenticated program file 311 may be prevented from accessing the contents stored in the trusted section 31 when being executed.

In step 506, the program file (s) moved to the monitored section 32 in step 505 is re-tagged as a to-be-isolated program file 321, or re-tagged as a to-be-authenticated program file and subsequently subjected to the authentication procedure as described in steps 401 to 407.

When it is determined, by the comparing module 24, that the current digital fingerprint corresponds with the original digital fingerprint 331 (that is, the authenticated program file 311 remains trusted), in step 507, the slave processingunit 2 enables access of the authenticatedprogram file 311 to the content stored in any of the trusted section 31 and the monitored section 32.

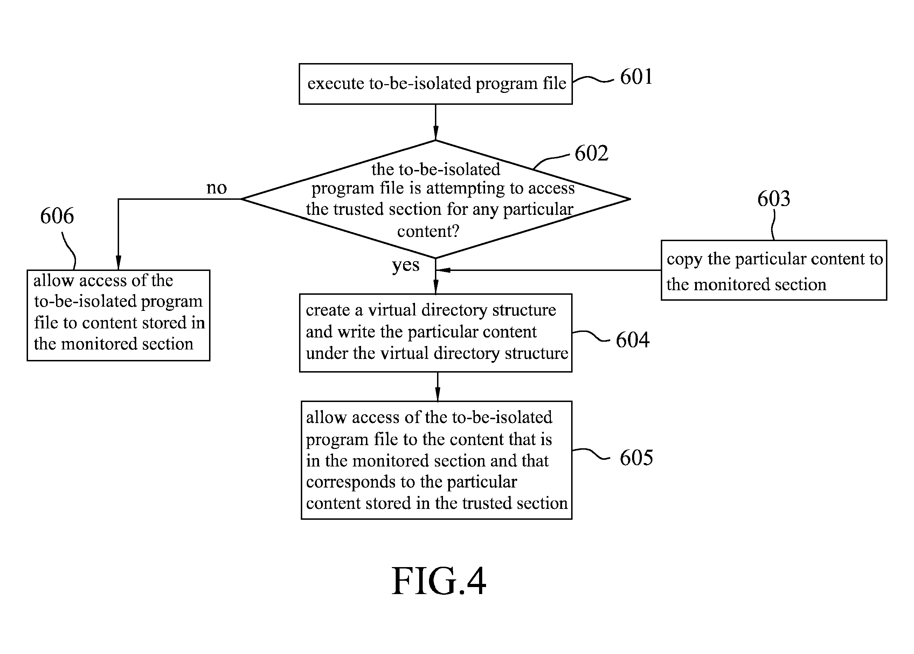

On the other hand, referring to Figure 4, when the to-be-isolated program file 321 is executed by the master processing unit 13 in step 601, the slave processing unit 2 performs a safe access procedure. Steps of the safe access procedure will now be described.

In step 602, the slave processing unit 2 determines whether the to-be-isolated program file 321 is attempting to access the trusted section 31 for any particular content.

When it is determined by the slave processing unit 2 that the to-be-isolated program file 321 is attempting to access the particular content stored in the trusted section 31, in step 603, the slave processing unit 2 drives the storage medium 3 so as to copy the particular content from the trusted section 31 to the monitored section 32.

Afterward, the slave processing unit 2 creates a virtual directory structure in the monitored section 32, and writes the particular content copied from the trusted section 31 under the virtual directory structure in step 604. Accordingly, in step 605, the slave processing unit 2 allows access of the to-be-isolated program file 321 via the virtual directory structure to the content that is in the monitored section 32 and that corresponds to the particular content stored in the trusted section 31.

For example, when the particular content is under the main directory "C:" in the trusted section 31, and the to-be-isolated program file 321 is under the main directory "X:" in the monitored section 32, the slave processing unit 2 may create a virtual directory structure "~C~:" under the main directory "X:" in step 604 . Subsequently, the slave processing unit 2 writes the particular content copied from the trusted section 31 into a sub-directory "X: \~C~\" under the virtual directory structure "~C~".

In this way, when it is intended to install the to-be-isolated program file 321 to the main directory "C: ", the slave processing unit 2 redirects the to-be-isolated program file 321 to be installed to the sub-directory "X:\~C~\".

When the to-be-isolated program file 321 is attempting to write the main directory "C:", the slave processing unit 2 redirects an access command from the to-be-isolated program file 321 to write the sub-directory "X: \~C~\" under the virtual directory structure "~C~" instead of the main directory "C:".

When the to-be-isolated program file 321 is attempting to read the main directory "C:", the slave processing unit 2 redirects an access command from the to-be-isolated program file 321 to read the sub-directory "X:\~C~\".

When it is determined by the slave processing unit 2 that the to-be-isolated program file 321 is not attempting to access any content stored in the trusted section 31, in step 606, the slave processing unit 2 allows access of the to-be-isolated program file 321 to the content stored in the monitored section 32.

To sum up, the system of this invention partitions the storage medium 3 into the trusted section 31 and the monitored section 32, and stores the program files that may attempt to access the contents stored in the storage medium 3 in one of the trusted section 31 and the monitored section 32 according to results of the authentication of the program files.

When an authenticated program file 311 stored in the trusted section 31 is executed, the comparing module 24 compares the current digital fingerprint of the authenticated program file 311 with the original digital fingerprint 331 that is associated with the authenticated program file 311 and that is stored in the hidden section 33. When it is determined that the current digital fingerprint of the authenticated program file 311 does not correspond with the original digital fingerprint 331, the authenticated program file 311, along with any program file recorded in the inspected record tracking module 23, is moved to the monitored section 32 and is prevented from directly accessing the content stored in the trusted section 31.

Furthermore, the system of this invention is configured to perform a safe access procedure in response to a to-be-isolated program file 321 being executed. When it is determined that the to-be-isolated program file 321 is attempting to access the trusted section 31 for any particular content, the system is configured to copy the particular content to the monitored section 32 in order to prevent the trusted section 31 from being directly accessed.

## Claims

1. A method for safe data access, the method to be implemented using a system that includes a master processing unit (13), a master processing unit (2) coupled to the master processing unit (13), and a storage medium (3) coupled to the master processingunit (2), themasterprocessingunit (2) including a calculating module (22), a comparing module (24) and a record tracking module (23), the storage medium (3) including a trusted section (31) and a monitored section (32) that can be identified and accessed by an operating system, and a hidden section (33) that cannot be identified and accessed by the operating system, **characterized in that** the method includes the steps of:
(a) upon execution, by the master processing unit (13), of an authenticated program file (311) stored in the trusted section (31) of the storage medium (3), generating, using the calculating module (22), a current digital fingerprint of the authenticated program file (311);
(b) comparing, using the comparing module (24), the current digital fingerprint with an original digital fingerprint (331) that is associated with the authenticated program file (311) and stored in the hidden section (33); and
(c) when it is determined, by the comparing module (24), that the current digital fingerprint does not correspond with the original digital fingerprint (331),
inspecting, by the record tracking module (23), an access record that is associated with the authenticated program file (311) and stored in the trusted section (31), and
moving, by the record tracking module (23), the authenticated program file (311) and any program file recorded in the access record thus inspected to the monitored section (32).

2. The method of Claim 1, **characterized in that** the method further includes, after step (b), the step of:
(d) when it is determined, by the comparing module (24), that the current digital fingerprint corresponds with the original digital fingerprint (331),
enabling, by the master processing unit (2), access of the authenticated program file (311) to content stored in any of the trusted section (31) and the monitored section (32) .

3. The method of any one of Claims 1 and 2, the system further including a transmission interface unit (12), the master processing unit (2) further including an authentication module (21), **characterized in that** the method further includes, prior to step (a), the step of:
(e) authenticating, using the authentication module (21), a to-be-authenticated program file (311) received via the transmission interface unit (12),
wherein when it is determined, in step (e), that the authentication of the to-be-authenticated program file (311) is unsuccessful, the authentication module (21) tags the to-be-authenticated program file (311) as a to-be-isolated program file (321), and stores the to-be-isolated program file (321) in the monitored section (32).

4. The method of Claim 3, **characterized in that**, when it is determined, in step (e), that the authentication of the to-be-authenticated program file (311) is successful:
the authentication module (21) tags the to-be-authenticated program file (311) as an authenticated program file (311), and stores the authenticated program file (311) in the trusted section (31); and
the calculating module (22) generates the original digital fingerprint (331) associated with the authenticated program file (311), and stores the original digital fingerprint (331) associated with the authenticated program file (311) in the hidden section (33).

5. The method of any one of Claims 3 and 4, **characterized in that** the method further includes, after step (e), the step of:
upon execution, by the master processing unit (13), of the to-be-isolatedprogram file (321) stored in the monitored section (32) of the storage medium (3), performing, by the master processing unit (2), a safe access procedure that includes
determining, by the master processing unit (2), whether the to-be-isolated program file (321) is attempting to access the trusted section (31) for any particular content,
when it is determined by the master processing unit (2) that the to-be-isolated program is attempting to access the particular content stored in the trusted section (31), driving, by the master processing unit (2), the storage medium (3) so as to copy the particular content from the trusted section (31) to the monitored section (32),
creating, by the master processing unit (2), avirtual directory structure in the monitored section (32), and writing the particular content copied from the trusted section (31) under the virtual directory structure, and
allowing, by the master processing unit (2), access of the to-be-isolated program file (321) to the content, that is in the monitored section (32) and that corresponds to the particular content stored in the trusted section (31), via the virtual directory structure.

6. The method of Claim 5, **characterized in that** the safe access procedure further includes:
when it is determined by the master processing unit (2) that the to-be-isolated program file (321) is not attempting to access content stored in the trusted section (31), allowing, by the master processing unit (2), access of the to-be-isolated program file (321) to content stored in the monitored section (32).

7. The method of any one of the preceding Claims, **characterized in that** the calculating module (22) generates the current digital fingerprint of the authenticated program file (311) using a secure hash algorithm (SHA).

8. A system for safe data access, including:
a master processing unit (13);
a master processing unit (2) coupled to said master processingunit (13) and including a calculating module (22), a comparing module (24) and a record tracking module (23); and
a storage medium (3) including
a trusted section (31) and a monitored section (32) that can be identified and accessed by an operating system, said trusted section (31) storing an authenticated program file (311) therein, and
a hidden section (33) that cannot be identified and accessed by the operating system,
**characterized in that**, when said master processing unit (13) executes the authenticated program file (311),
said calculating module (22) generates a current digital fingerprint of the authenticated program file (311) ;
said comparing module (24) compares the current digital fingerprint with an original digital fingerprint (331) that is associated with the authenticated program file (311) and stored in said hidden section (33); and
when it is determined, by said comparing module (24), that the current digital fingerprint does not correspond to the original digital fingerprint (331), said record tracking module (23) inspects an access record associated with the authenticated program file (311) and stored in said trusted section (31), and moves any program recorded in said access record thus inspected to said monitored section (32).

9. The system of Claim 8, **characterized in that**, when it is determined, by said comparing module (24), that the current digital fingerprint corresponds to the original digital fingerprint (331), said master processing unit (2) enables access of the authenticated program file (311) to content stored in any of said trusted section (31) and said monitored section (32).

10. The system of any one of Claims 8 and 9, **characterized in that**:
said system further includes a transmission interface unit (12), saidmasterprocessingunit (13) further including an authentication module (21) that is configured to authenticate a to-be-authenticated program file (311) received via said transmission interface unit (12); and
when it is determined, by said authentication module (21), that the authentication of the to-be-authenticated program file (311) is unsuccessful, said authentication module (21) tags the to-be-authenticated program file (311) as a to-be-isolated program file (321), and stores the to-be-isolated program file (321) in said monitored section (32).

11. The system of Claim 10, **characterized in that**, when it is determined by said authentication module (21), that the authentication of the to-be-authenticated program file (311) is successful:
said authentication module (21) tags the to-be-authenticated program file (311) as an authenticated program file (311), and stores the authenticated program file (311) in said trusted section (31); and
said calculating module (22) generates the original digital fingerprint (331) associated with the authenticated program file (311), and stores the original digital fingerprint (331) associated with the authenticated program file (311) in said hidden section (33).

12. The system of any one of Claims 10 and 11, **characterized in that**, upon execution, by said master processing unit (13), of the to-be-isolated program file (321) stored in said monitored section (32) of said storage medium (3), said master processing unit (2) is configured to perform a safe access procedure, the safe access procedure including:
determining, by said master processing unit (2), whether the to-be-isolated program file (321) attempts to access said trusted section (31) for any particular content;
when it is determined by said master processing unit (2) that the to-be-isolated program is attempting to access the particular content stored in the trusted section (31), driving, by said master processing unit (2), said storage medium (3) so as to copy the particular content from said trusted section (31) to said monitored section (32);
creating, by said master processing unit (2), a virtual directory structure in said monitored section (32), and writing the particular content copied from said trusted section (31) under the virtual directory structure; and
allowing, by said master processing unit (2), access of the to-be-isolated program file (321) to the content that is in said monitored section (32) and that corresponds to the particular content stored in said trusted section (31), via the virtual directory structure.

13. The system of Claim 12, **characterized in that** the safe access procedure further includes:
when it is determined by said master processing unit (2) that the to-be-isolated program file (321) is not attempting to access content stored in said trusted section (31), allowing, by said master processing unit (2), access of the to-be-isolated program file (321) to content stored in said monitored section (32).

14. The system of any one of Claims 8 to 13, **characterized in that** said calculating module (22) generates the current digital fingerprint of the authenticated program file (311) using a secure hash algorithm (SHA).
